# NEW EUROPEAN PATENT SPECIFICATION

(11) **EP 1 156 566 B2**
(45) Date of publication and mention of the opposition decision: **18.02.2015**
(45) Mention of the grant of the patent: 23.02.2011
(21) Application number: 01660098.3
(22) Date of filing: 18.05.2001
(51) Int. Cl.: H02G 3/08

(54) **A junction box for electric cables**
Elektrische Kabelverbindungsgehäuse
Boîtier de raccordement de câbles électriques

(30) Priority: 19.05.2000 FI 20001201
(43) Date of publication of application: 21.11.2001
(73) Proprietor: ABB Oy, 00380 Helsinki (FI)
(72) Inventor: Parviainen, Mauri, 10160 Degerby (FI); Keskinen, Esko, 06150 Porvoo (FI); Turunen, Jukka, 07700 Koskenkylä (FI); Kaukonen, Keijo, 06100 Porvoo (FI)
(74) Representative: Zimmermann & Partner

(56) References cited:
- DE-A- 4 222 042
- DE-U- 29 817 565

## Description

The invention relates to a junction box for electric cables for use in the electric cable installations of buildings as a wire connection box, which comprises four walls, a base integrally connected to them, and a cover for closing the open side of the box opposite the bottom, and weakened areas in the walls for cable entries. (See document DE-A1-42 22 042).

This type of known junction boxes are not suited in the best possible way for different applications, where there is a need for placing, supporting or fastening a variety of accessories inside the box. In known junction boxes, from the base protrude, for example, sleeve-like fastening projections to which a connector bar can be fixed in a predetermined position. The inner surfaces of the walls of the box are usually smooth.

The patent publication FI-94578 discloses a plug box, which is not a junction box but a utility box intended for installing plugs, switches and other inserts, on the opposite inner walls of which box are grooves to which the separating wall can be fixed and locked with projecting locking means to the locking notches in the grooves. Adjacent to the corners of the box are also vertical ribs, the purpose of use of which is not disclosed.

The catalog "Spelsberg Katalog'93" by Günther Spelsberg GmbH & Co KG, Schalksmühle, shows on page 18 junction boxes KSD 25 and KSD166 PA with slidable seals. Therein, closing plugs and stubs are slidable into 3 open and 4 breakaway inserts. Further, KSD 166 PA has a connector block mounted to the bottom plate of the junction box.

The object of the invention is to provide a junction box for electric cables which makes possible versatile installation of the accessories to be installed in the box in a supported manner.

This object is achieved by means of the invention on the basis of the characteristics disclosed in the appended claim 1. The dependent claims describe preferred embodiments of the invention.

The invention is illustrated in the following by means of an example, with reference to the accompanying drawings, in which:
- Figure 1: shows the base of the box according to the invention with its walls, in so far as it is made of hard plastic;
- Figures 2a and 2b: show perspective views of the base of the box according to the invention with its walls, the openings in which are cast over with soft plastic parts. In addition are shown examples of accessories installed inside the box;
- Figures 3a to 3c: show the cover of the box according to one example;
- Figure 4: shows an installation plate which can be placed in the box as shielding from contact and, if necessary, as a circuit board;
- Figure 5: shows the plastic body of a three-pole connector bar, which can be installed in the box according to the invention;
- Figure 6: shows a separating wall which can be installed in the box according to the invention, for example, for separating weak and strong current connections from each other;
- Figure 7: shows the box assembled from the parts shown in Figures 1 to 5 as an assembly view;
- Figure 8: shows a latch by means of which a pipe joint, lath joint or other accessory installed in the box wall opening can be locked in place;
- Figures 9a and 9b: show a supplementary part which can be locked to the vertical ribs at the desired height;
- Figure 10: shows a metallic locking part of the supplementary part;
- Figures 11a and 11b: show the same supplementary part as Figure 9a and 9b, but as seen from the opposite side;
- Figure 12: shows the supplementary parts according to Figures 9a, 9b, 11a, 11b when locked to the vertical ribs of the box; and
- Figure 13: shows supplementary parts according to a modified embodiment when locked to the vertical ribs.

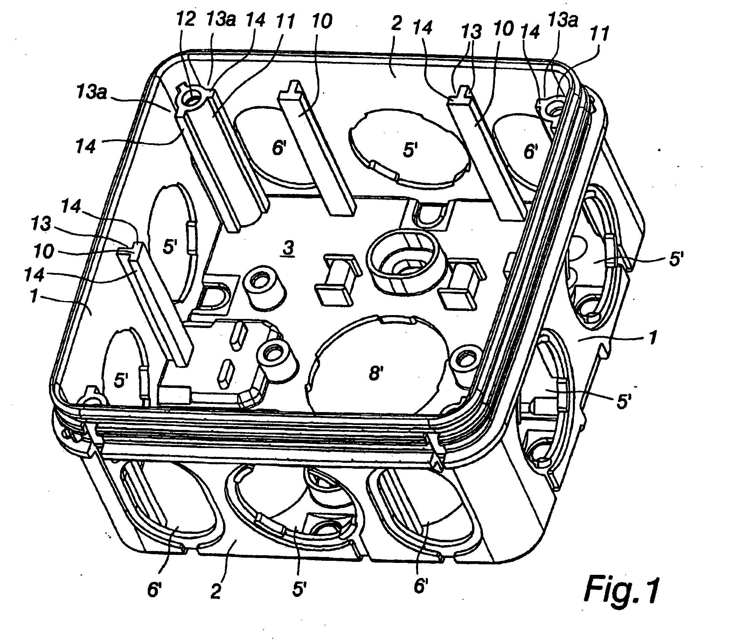

Figure 1 shows the base of the junction box according to the invention with its walls, in so far as they are made of hard plastic. The four side walls 1, 2 are integrally connected to the base 3. On the inner surfaces of the walls 1, 2 are vertical ribs 10 , and in the corners between the walls 1, 2 are vertical ribs 11. In the case shown, the vertical ribs 10 are T-shaped in cross-section, whereby on both of their sides are formed gripping grooves 13 and gripping projections 14, which may be utilised, in a manner described in greater detail below, in installing accessories in the box. On both sides of the vertical ribs 11 in the corners, at an angle of 90° with respect to each other, are also gripping projections 14 which border gripping grooves 13a between themselves and the walls 1, 2.

In each corner of the box is one vertical rib 11. The box has two opposite walls 1, with both of which is associated one vertical rib 10 at the centre of the wall. The box has two other opposite walls 2, with both of which are associated two vertical ribs, the distance between which is the same predetermined modular dimension which is the distance between the vertical ribs 10, 11 at the centre and in the corners of the wall.

In the hard plastic wall of the box, which is equipped with two vertical ribs 10, is made one circular opening 5' between the vertical ribs 10, and two vertically elongated openings 6' between the vertical ribs 10, 11 in the wall and corners. These openings 6' may serve, for example, in installing several small-diameter cables in the same cable entry.

In the box wall 1 equipped with one vertical rib 10 are made, for example, circular openings 5' on both sides of the vertical rib 10. The sizes, shapes and locations of the openings may naturally vary.

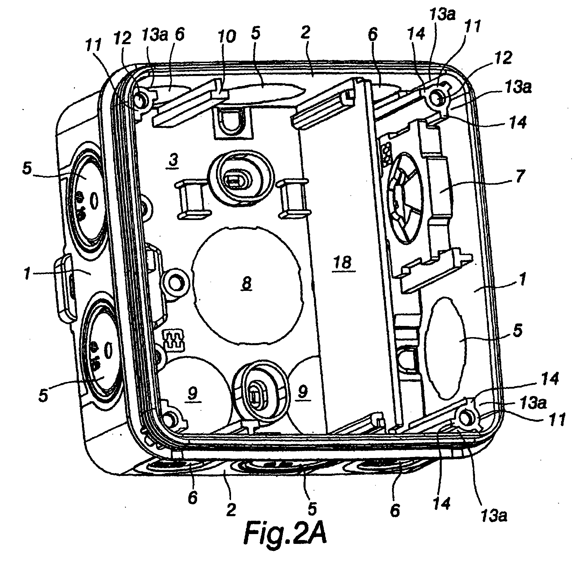

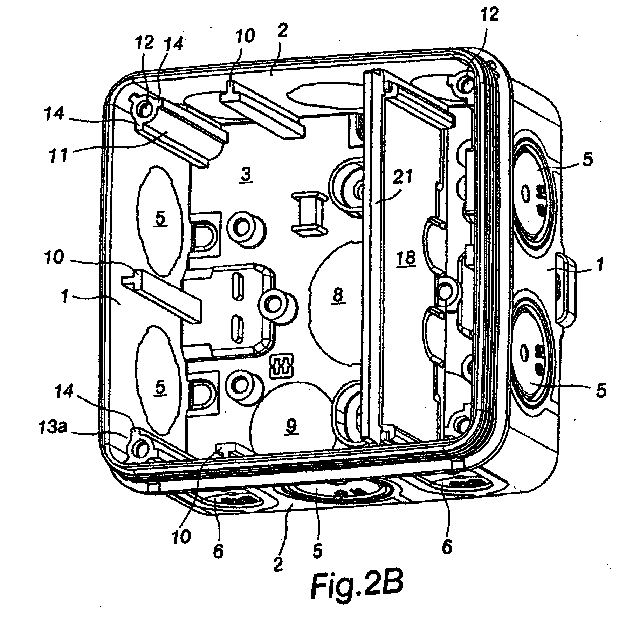

Figures 2a and 2b show the strain-relief when installed at the opening blank 5. The cable is inserted in the box by piercing an opening blank 5. When the cable is inserted through the centre of the opening blank 5, it is guided inside the box through the strain-relief 7.

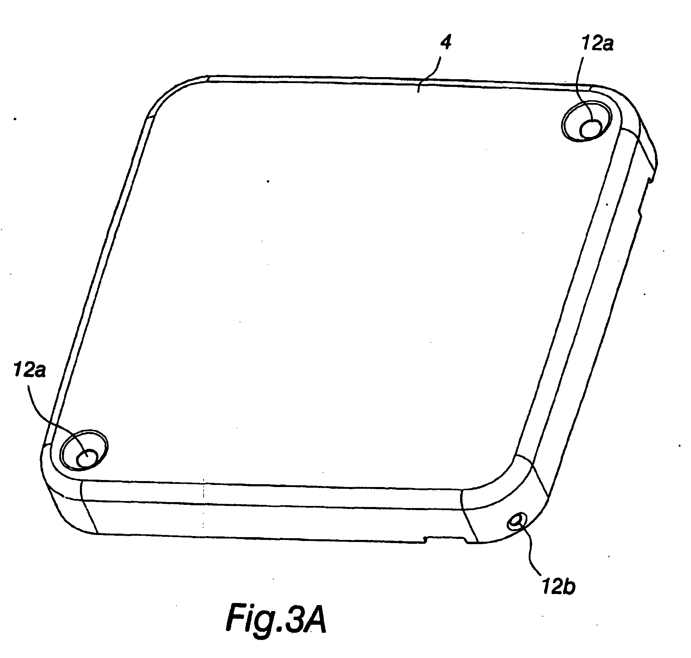

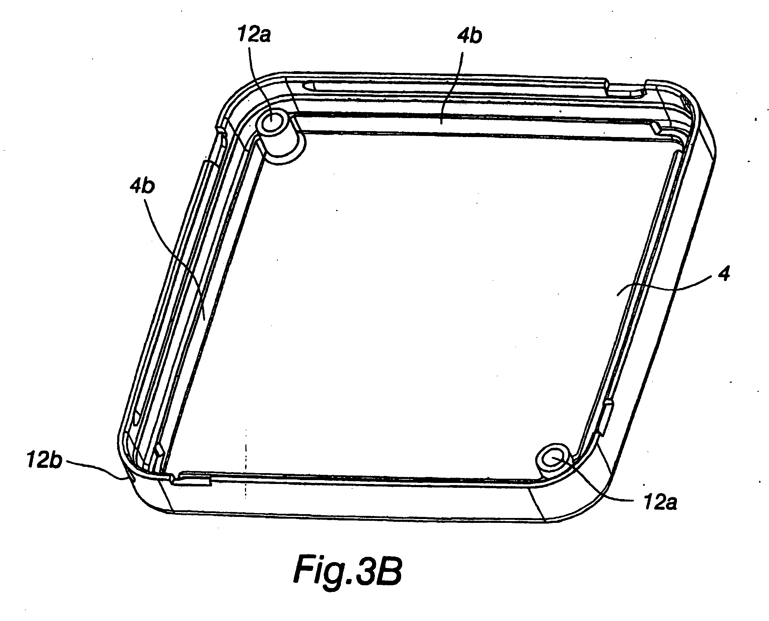

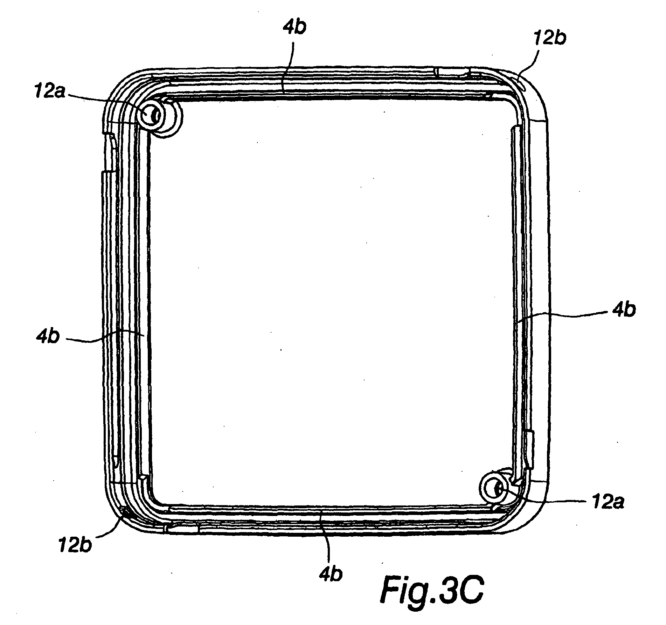

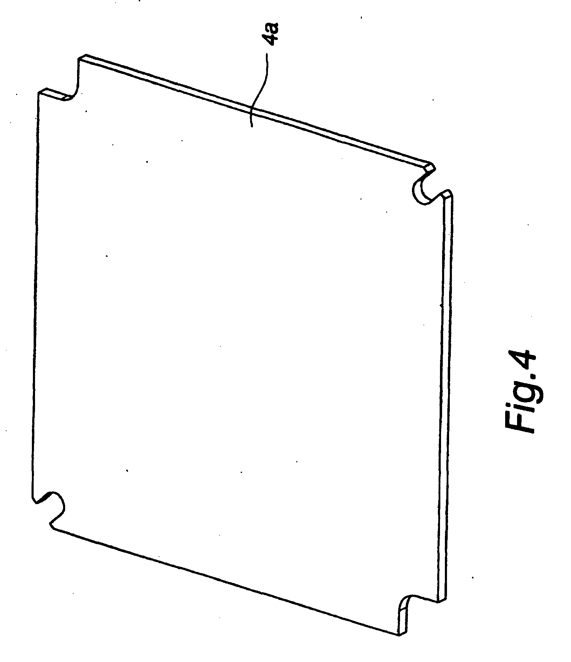

Figures 2a and 2b show a ready-made box base with walls, the openings of which are cast over by means of soft plastic parts 5 and 6, which form weakened areas for opening the cable entries or for inserting the cables directly through the membrane-type weakened areas without specifically opening cable entries. The box relating to the invention may also consist of a single plastic material in which the weakened areas for the cable entries have been made by means of weakened grooves and/or reduced material thickness. Figures 2a and 2b further show how the box relating to the invention can be utilised in installing accessories, in the case shown in the installation of a separating wall 18 and a strain-relief 7. Both accessories 18, 7 are provided with gripping projections and/or gripping grooves, which are designed and dimensioned so as to act together with the gripping projections and/or gripping grooves of the vertical ribs 10, 11. If necessary, the installation plate 4a shown in Figure 4 can be placed inside the mouth of the box, supported on the ends of the vertical ribs 10, 11. Once the installation plate 4a is fixed (by means of screws or the like), it may form shielding from contact for the live parts underneath. If necessary, the installation plate 4a may also act as a circuit board, should it be desirable to install electronics into the box. The box is closed with the cover shown in Figures 3a to 3c, which is provided with screw holes 12a in the case shown. The vertical ribs 11 are provided with screw holes 12 which extend inside the vertical ribs 11, in their longitudinal direction, and to which the threaded part of the fixing screws attaches. In two opposite corners of the cover 4 are also sealing holes 12b, at which point there are openings in the box body. The sealing is made on a sealing thread threaded through the openings in the cover. Alternatively, the cover 4 may be without screw holes 12, in which case it is fixed simply by means of a snap joint around the mouth of the box.

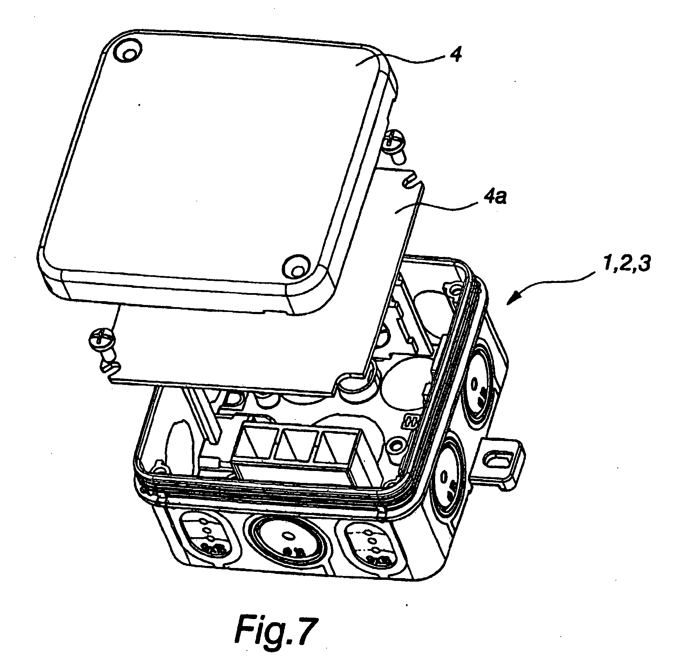

As shown in Figure 7, the plate 4a can be fixed by means of screws to the screw holes 12 in the vertical ribs 11, which are left free by the fixing screws of the cover. A screwless cover closed by a snap-joint can also be used. On the inside ridge of the cover 4 have been made cut-outs for the heads of the fixing screws of the plate 4a. The circuit board or installation plate 4a remains in place also without screws when the cover 4 is fixed. The ridge 4b on the cover 4 is dimensioned in such a way that an approximately 1.6 mm thick (or other standard thickness) circuit board is completely supported between the ridge and the vertical ribs 10, 11 of the box base. Sideways the plate 4a is then supported on the inner walls of the box. The plate 4a may be fixed also in some other manner to the vertical ribs 10, 11 or the screw holes 12 of the vertical ribs.

It is also possible to fix the box from the back, for example, to a plate by fixing the screws through the plate to screw holes (not shown) in the corners of the box base. The screw holes extend from the base of the box inside the vertical ribs 11 located in the corners.

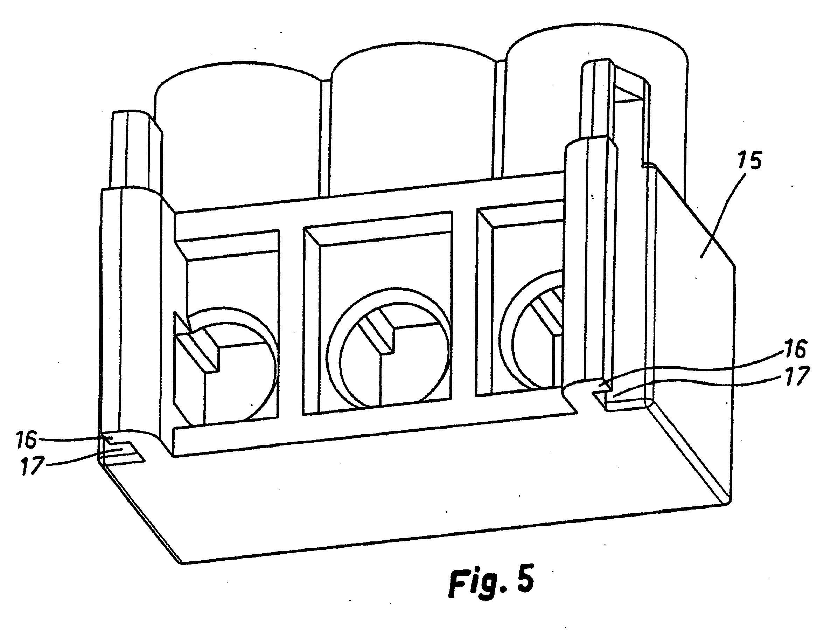

The connector bar body 15 shown in Figure 5 is provided with gripping projections 16 and gripping grooves 17, the distance between which is dimensioned to correspond to the modular dimensioning between the vertical ribs 10 or the vertical ribs 10 and 11, which means that the connector bar 15 can be installed behind any opening blank 5 inside the box.

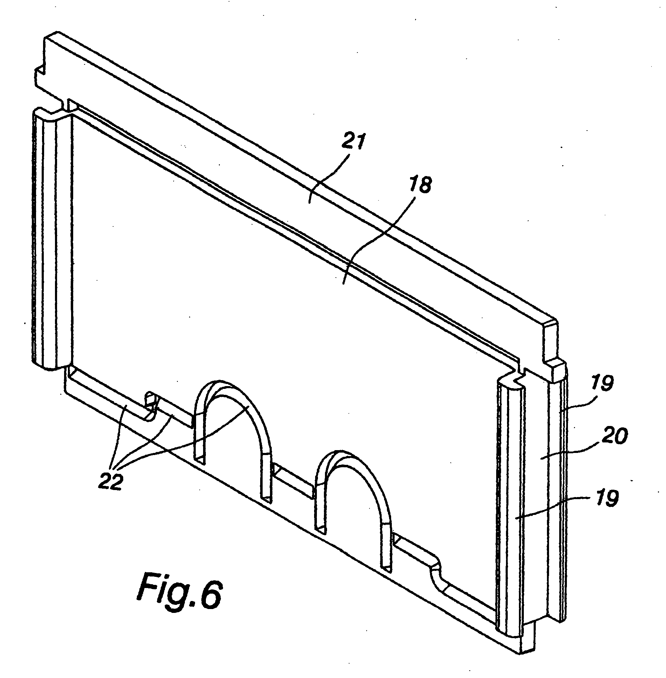

Figure 6 shows a separating wall 18, which is shown installed in place in Figure 2, whereby the separating wall 18 is connected to the side walls, base and cover of the box in such a way that it forms sufficient protection between the connections of varying voltages located in different parts of the box (insulation and shielding from contact). The breakable blank 21 must be broken off if the separating wall 18 is to be used together with the installation plate 4a shown in Figure 4. On the lower edge of the separating wall are breaking lines 22 by means of which sections of desired shape can also be broken off at the bottom of the separating wall for entering cables or for receiving protrusions on the base, which means that the separating wall 18 can be installed in different places and different directions. An essential part of the separating wall 18 are the groove-like shapes at its opposite ends, which form gripping projections 19 and a gripping groove 20 for fastening the separating wall 18 to the vertical ribs 10.

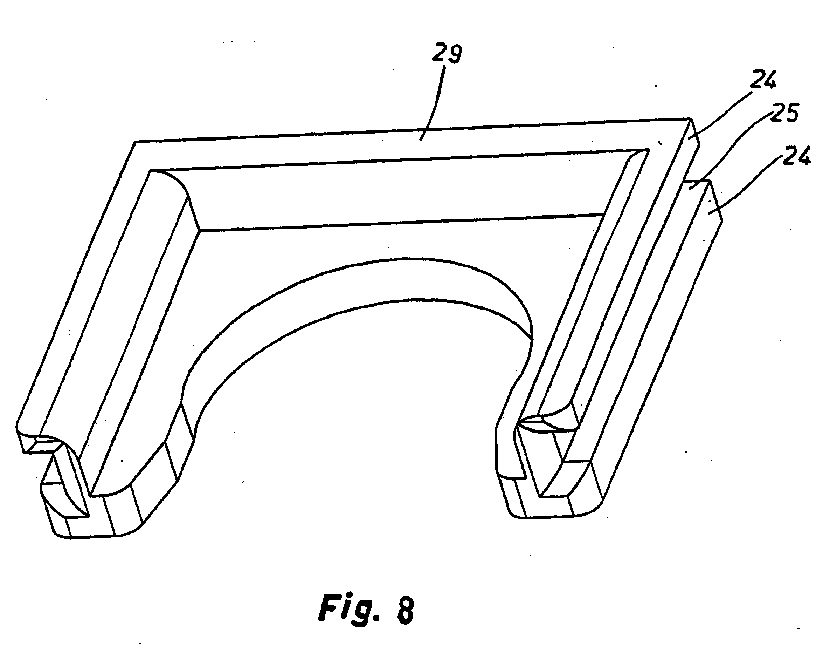

Figure 8 further shows a latch provided with a curved centre notch, on the outer faces of the vertical branches of which latch are, as in the above accessories, gripping projections 24 and a gripping groove 25 for gripping to the vertical ribs 10, 11. This type of latch is suitable for fastening pipe joints, lath joints, and similar lead-through pieces installed in the box openings.

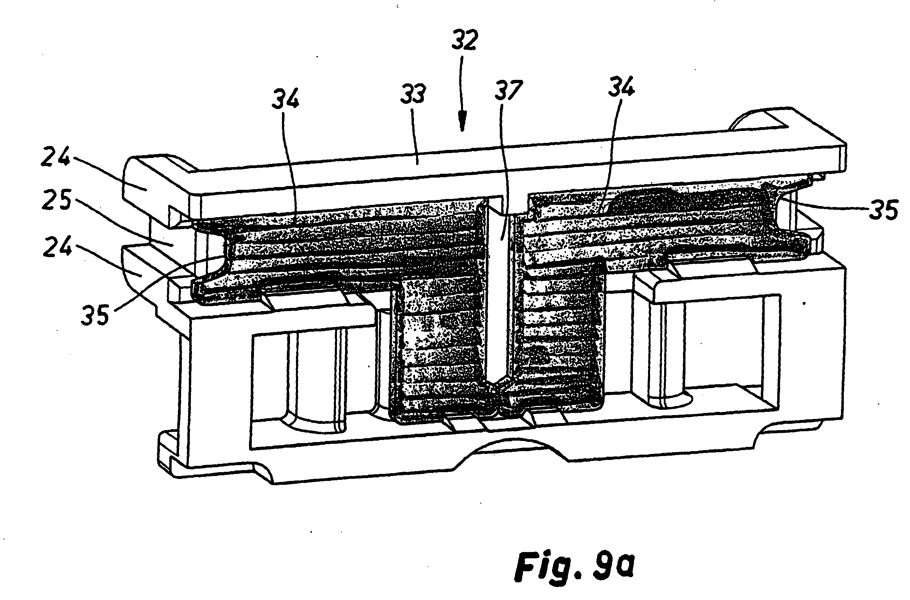

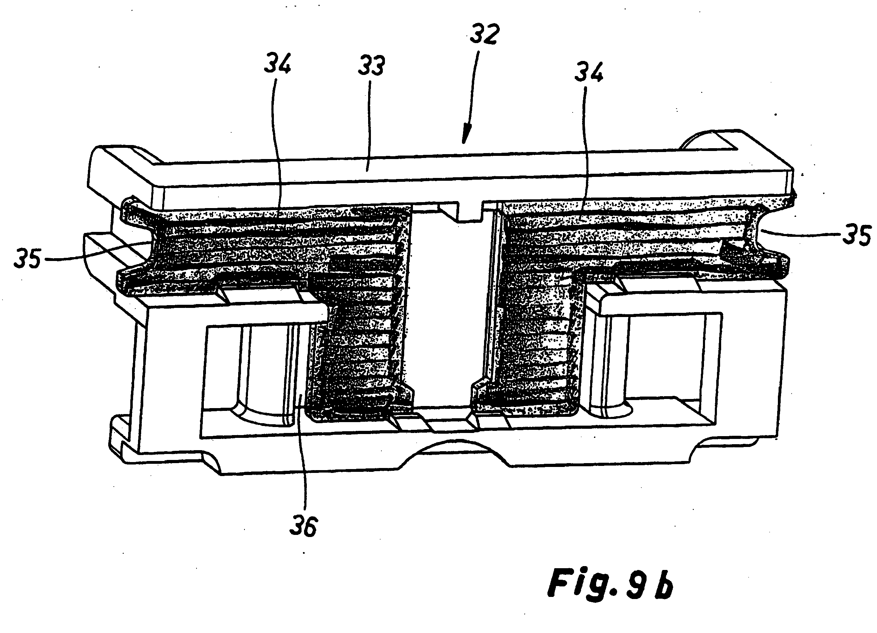

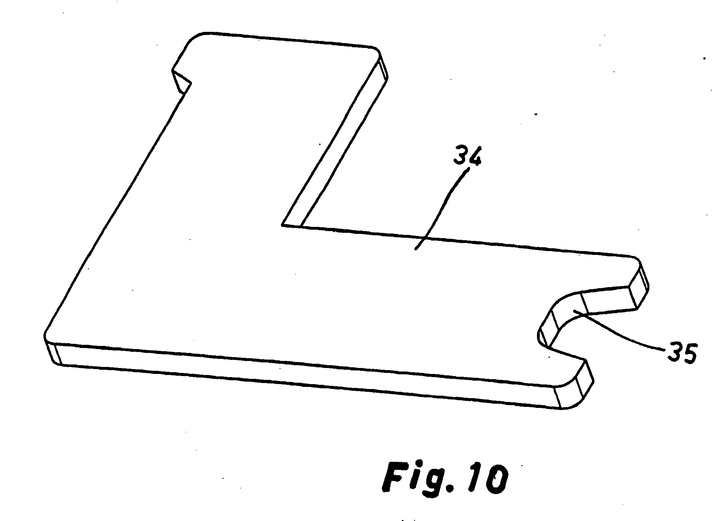

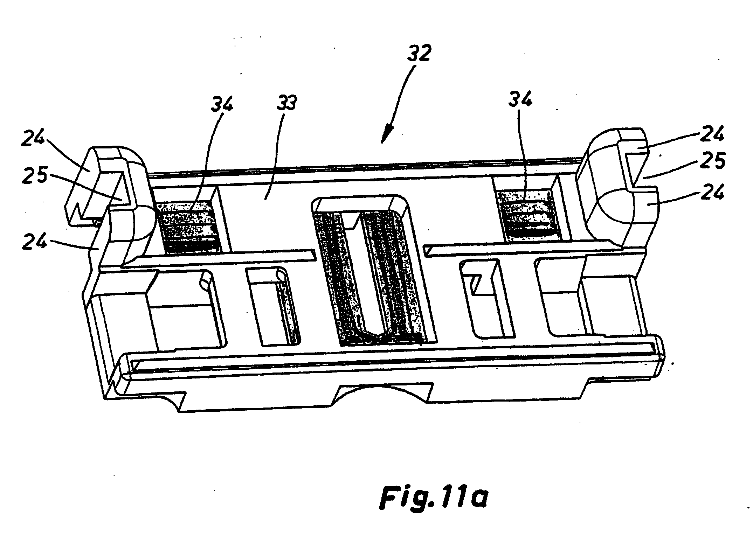

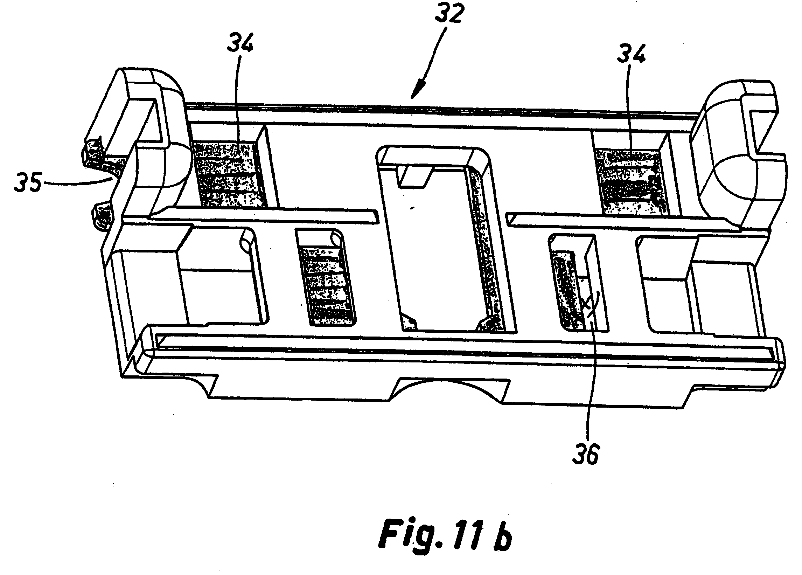

Figures 9a, 9b, 10, 11a and 11b show a supplementary part 32 which can be locked to the vertical ribs 10, 11 at a desired height. The supplementary part 32 comprises a plastic part 33 and two metallic locking parts 34 which are shown separately in Figure 10. At opposite ends of the plastic part 33 are gripping projections 24 and between them gripping grooves 25, as in the accessories described above. The metal parts are able to move away from each other and towards each other in the direction of their plane. The free motion tolerance between the plastic part 33 and the metal parts 34 may be tight, whereby the metal parts 34 will move even by minor application of force. In the gap 37 between the metal parts 34 can be fitted a screwdriver, by turning which the locking parts 34 can be distanced from each other, whereby at their ends, the notches 35 located at the grooves 25 bite into the edges of the projections 14 of the vertical ribs 10, 11. In Figures 9a and 11a, the locking parts 34 are shown in an unlocked position, and in Figures 9b and 11b they are shown in a locking position where they are distanced from each other. The locking parts 34 can be returned from the locking position by placing the tip of the screwdriver in the gap 36 between the plastic part and the locking part, whereby, by turning the screwdriver, the locking parts 34 can be made to move towards each other and the locking be opened. The notches 35 converge suitably towards the base, so that the edges of the notches 35 can be made to bite into the corners of the projections 14.

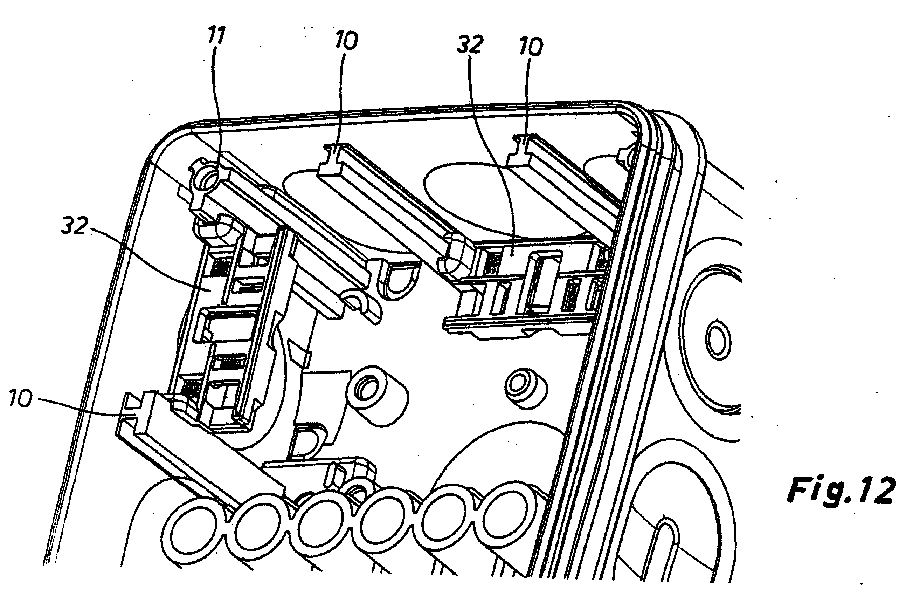

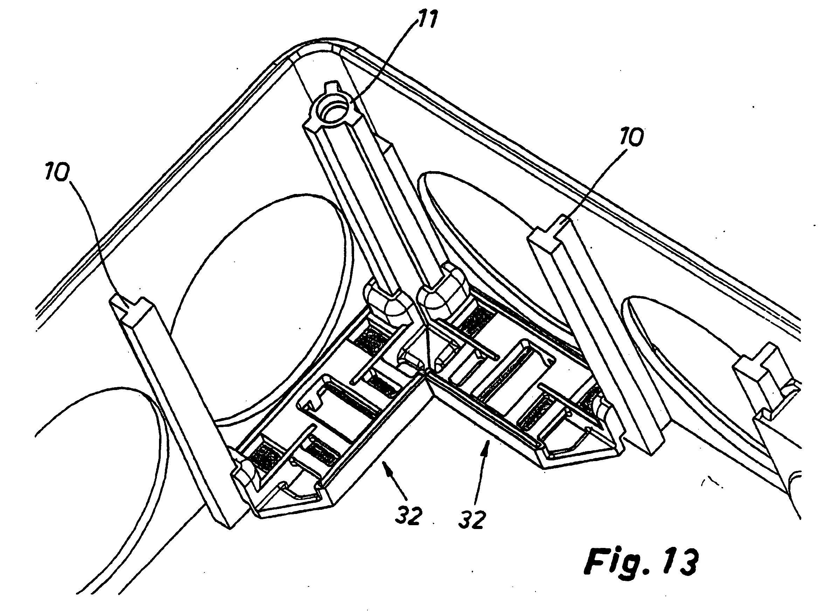

Figure 12 shows two locking parts 32, one of which is fixed between the ribs 10 on the base of the box and the other between the ribs 10 and 11, in the upper part of the ribs. In the embodiment shown in Figure 13, the corners of the supplementary parts 32 are bevelled in such a way that two supplementary parts 32 can be mounted on and locked to the same corner rib 11.

The supplementary parts 32 shown act as bases for other accessories, such as a strain-relief, a connector bar, and the like. A corresponding locking arrangement can be implemented also in conjunction with the strain-relief, connector bar, or the like itself, in which case no separate supplementary part 32 is required.

The accessories described above are merely examples of how the box body relating to the invention can be utilised. The shape, structure and intended use of the accessories may vary in many ways.

In addition to acting as fastening supports, the vertical ribs 10, 11 also act as ribs reinforcing the walls 1, 2, whereby the thickness of the walls may be thinner than with smooth walls.

The embodiment shown above illustrates the smallest box in a series of boxes, in which the modular dimension between the vertical ribs may appear also in larger boxes of the series of boxes, for example, as follows:
- in a medium-sized box, there may be three openings and three "modular dimensions" adjacent to each other on all sides of the box
- in the largest box there could be two similar modular dimensions and a third larger measure between the vertical ribs on all sides.

In such a case, parts fitting the "modular dimension" will fit in all different sizes of boxes.

## Claims

1. A junction box for electric cables for use in the electric cable installations of buildings as a wire connection box, which comprises four walls (1, 2), a base (3) integrally connected to them, and a cover (4) for closing the open side of the box opposite the base, and weakened areas (5, 6) in the walls for cable entries, wherein on the inner surfaces of the walls (1, 2) and in the corners between the walls are vertical ribs (10, 11) which are the shape of projecting ridges, between which are formed at least four modular dimensions of equal length in such a way that at least one modular dimension is on each of the four walls (1, 2) of the box, that on one or both sides of the vertical ribs (10, 11) are formed gripping grooves (13) and gripping projections (14) limiting them for receiving the gripping projections (16, 19, 24) and/or gripping grooves (17, 25, 20) of accessories installed in the box, such as those of connectors (15), fasteners (29), a separating wall (18) and/or a strain-relief (23, 27), in such a way that the accessories can be installed in place so as to be retained by the vertical ribs (10, 11), and that a vertical rib (11) in at least one corner comprises two gripping grooves (13a), which serve the fixing of accessories installed on adjacent walls (1,2), **characterised in that** the walls of the box between the vertical ribs completely surround the weakened areas.

2. A junction box for electric cables as claimed in claim 1, **characterised in that** there is a gripping groove (13, 13a) on both sides of at least four vertical ribs (10, 11).

3. A junction box for electric cables as claimed in claim 1 or 2, **characterised in that** there is one vertical rib (11) in each of the four corners of the box, and that the box has two opposite walls (1), with both of which is associated one vertical rib (10) at the centre of the wall, and two other opposite walls (2), with both of which are associated two vertical ribs (10), the mutual distance between which is the same predetermined modular dimension, which is the distance between the vertical ribs (10, 11) at the centre of the wall (1) and in the corners.

4. A junction box for electric cables as claimed in any of the claims 1 to 3, **characterised in that** in the wall (2) of the box, which is equipped with two vertical ribs (10), is made one circular opening blank (5) between the vertical ribs (10) and two vertically elongated opening blanks (6) between the vertical ribs (10, 11) in the wall and corners.

5. A junction box for electric cables as claimed in any of the claims 1 to 4, **characterised in that** the vertical ribs (11) in the corners of the box are provided with a screw hole (12) which extends inside the rib, in its longitudinal direction, to receive the fixing screw of the cover (4).

6. A junction box for electric cables as claimed in any of the claims 1 to 5, **characterised in that** it comprises an installation plate (4a), which can be placed so as to be supported on the upper ends of the vertical ribs (10, 11), and which acts as shielding from contact and, if necessary, as a circuit board.

7. A junction box for electric cables as claimed in any of the claims 1 to 6, **characterised in that** in the corners of the box base (3) are screw holes which extend inside the vertical ribs (11) in the corners of the box for fixing the box to the plate from the back, by means of screws fixed to the said screw holes through the plate.

8. A junction box for electric cables as claimed in any of the claims 1 to 7, **characterised in that** it comprises a supplementary part (32) locked to the vertical ribs (10, 11) at the desired height, the said part comprising metallic locking parts (34) which can be moved to grip on the edges of the vertical ribs (10, 11).

9. A junction box for electric cables as claimed in any of the claims 1 to 8, **characterised in that** it comprises at least four, preferably at least six modular dimensions on each of the four walls (1, 2) of the box.

## Patentansprüche

1. Abzweigdose für Stromkabel zur Verwendung bei der Installation elektrischer Leitungen in Gebäuden, als Kabel-Verbindungsdose, umfassend vier Wände (1, 2), einen Boden (3), welcher mit denselben in einem Stück ausgeführt ist, und einen Deckel (4) zum Schließen der offenen Seite der Dose, dem Boden gegenüberliegend, sowie dünne Bereiche (5, 6) in den Wänden für Kabeleingänge, wobei sich an den inneren Flächen der Wände (1, 2) und in den Ecken zwischen den Wänden vertikale Rippen (10, 11) befinden, welche die Form vorstehender Leisten aufweisen, wobei zwischen denselben wenigstens vier Plätze für Moduleinschübe von gleicher Länge ausgebildet sind, derart, dass sich wenigstens ein Platz für einen Moduleinschub an jeder der vier Wände (1, 2) der Dose befindet, dadurch, dass an einer oder an beiden Seiten der vertikalen Rippen (10, 11) Eingreif-Vertiefungen (13) und Eingreif-Vorsprünge (14), welche dieselben begrenzen, ausgebildet sind, zum Aufnehmen der Eingreif-Vorsprünge (16, 19, 24) und/oder der Eingreif-Vertiefungen (17, 25, 20) von Zubehörteilen, welche in der Dose installiert sind, wie etwa jener von Verbindern (15), von Befestigern (29), von einer Trennwand (18) und/oder von einer Zugentlastung (23, 27), derart, dass die Zubehörteile an ihrem Platz so installiert sein können, dass sie von den vertikalen Rippen (10, 11) festgehalten werden, und dadurch, dass eine vertikale Rippe (11) in wenigstens einer Ecke zwei Eingreif-Vertiefungen (13a) aufweist, welche dem Befestigen von Zubehörteilen dienen, die an benachbarten Wänden (1, 2) installiert sind, daduch gekennzeichnet, dass die Wände der Dose zwischen den vertikalen Rippen die dünnen Bereiche vollständig umgeben.

2. Abzweigdose für Stromkabel nach Anspruch 1, **dadurch gekennzeichnet, dass** sich eine Eingreif-Vertiefung (13, 13a) an beiden Seiten von wenigstens vier vertikalen Rippen (10, 11) befindet.

3. Abzweigdose für Stromkabel nach Anspruch 1 oder 2, **dadurch gekennzeichnet, dass** sich eine vertikale Rippe (11) in jeder der vier Ecken der Dose befindet, und dadurch, dass die Dose zwei gegenüberliegende Wände (1) aufweist, wobei einer jeden der beiden eine vertikale Rippe (10) in der Mitte der Wand zugeordnet ist, und zwei weitere gegenüberliegende Wände (2), wobei einer jeden der beiden zwei vertikale Rippen (10) zugeordnet sind, wobei der Abstand derselben voneinander derselbe vorbestimmte Platz für einen Moduleinschub ist, wie das auch der Abstand zwischen den vertikalen Rippen (10, 11) in der Mitte der Wand (1) und in den Ecken ist.

4. Abzweigdose für Stromkabel nach einem der Ansprüche 1 bis 3, **dadurch gekennzeichnet, dass** in der Wand (2) der Dose, welche mit zwei vertikalen Rippen (10) versehen ist, eine kreisförmige Öffnungs-Aussparung (5) hergestellt ist, zwischen den vertikalen Rippen (10), und zwei in vertikaler Richtung längliche Öffnungs-Aussparungen (6) hergestellt sind, zwischen den vertikalen Rippen (10, 11) in der Wand und in den Ecken.

5. Abzweigdose für Stromkabel nach einem der Ansprüche 1 bis 4, **dadurch gekennzeichnet, dass** die vertikalen Rippen (11) in den Ecken der Dose mit einem Loch (12) für eine Schraube versehen sind, welches sich im Inneren der Rippe erstreckt, in Längsrichtung derselben, zum Aufnehmen der Befestigungsschraube des Deckels (4).

6. Abzweigdose für Stromkabel nach einem der Ansprüche 1 bis 5, **dadurch gekennzeichnet, dass** sie eine Installationsplatte (4a) umfasst, welche derart angeordnet sein kann, dass sie auf den oberen Enden der vertikalen Rippen (10, 11) getragen ist, und welche als ein Schutz gegen Berührung dient und, wenn nötig, als eine Leiterplatte.

7. Abzweigdose für Stromkabel nach einem der Ansprüche 1 bis 6, **dadurch gekennzeichnet, dass** sich in den Ecken des Bodens (3) der Dose Löcher für Schrauben befinden, welche sich im Inneren der vertikalen Rippen (11) in den Ecken der Dose erstrecken, zum Befestigen der Dose an der Platte von hinten, mittels Schrauben, welche in den Löchern für die Schrauben durch die Platte befestigt sind.

8. Abzweigdose für Stromkabel nach einem der Ansprüche 1 bis 7, **dadurch gekennzeichnet, dass** sie ein Zusatzteil (32) aufweist, verriegelt an den vertikalen Rippen (10, 11) auf der gewünschten Höhe, wobei das Teil metallene Verriegelungsteile (34) aufweist, welche bewegt werden können, um an den Rändern der vertikalen Rippen (10, 11) einzugreifen.

9. Abzweigdose für Stromkabel nach einem der Ansprüche 1 bis 8, **dadurch gekennzeichnet, dass** sie wenigstens vier, vorzugsweise wenigstens sechs Plätze für Moduleinschübe aufweist, an allen vier Wänden (1, 2) der Dose.

## Revendications

1. Boîtier de raccordement de câbles électriques à utiliser dans les Installations de câbles électriques de bâtiments comme un boîtier de raccordements de fils électriques, qui comprend quatre parois (1,2), une base (3) raccordée en un seul tenant à celles-ci, et un couvercle (4) pour fermer le côté ouvert du boîtier opposé à la base, et des zones d'affaiblissement (5,6) dans les parois pour les entrées de câbles, dans lequel sur les surfaces intérieures des parois (1,2) et dans les coins entre les parois se trouvent des nervures verticales (10,11) qui prennent la forme d'arêtes protubérantes, entre lesquelles sont formées au moins quatre dimensions modulaires de longueur égale de telle sorte que au moins une dimension modulaire soit sur chacune des quatre parois (1,2) du boîtier, que sur un ou les deux côtés des nervures verticales (10,11) soient formées des rainures de mise en prise (13) et des protubérances de mise en prise (14) les limitant pour recevoir les protubérances de mise en prise (16,19,24) et/ou des rainures de mise en prise (17,25,20) d'accessoires installés dans le boîtier, comme celles de connecteurs (15), fixations (29), une paroi de séparation (18) et/ou un serre-câble (23,27), d'une manière telle que les accessoires puissent être installés à leur place de manière à être retenus par les nervures verticales (10,11) et qu'une nervure verticale (11) dans au moins un coin comprenne deux rainures de mise en prise (13a) qui servent à fixer les accessoires installés sur des parois adjacentes (1,2), charactérisé en ce que les parois du boîtier entre les nervures verticales entourent complètement les zones d'affaiblissement.

2. Boîtier de raccordement de câbles électriques selon la revendication 1, **caractérisé en ce que** une rainure de mise en prise (13,13a) se trouve sur les deux côtés des au moins quatre nervures verticales (10,11).

3. Boîtier de raccordement de câbles électriques selon la revendication 1 ou 2, **caractérisé en ce que** une nervure verticale (11) se trouve dans chacun des quatre coins du boîtier, et **en ce que** le boîtier possède deux parois opposées (1), auxquelles est respectivement associée une nervure verticale (10) au centre de la paroi, et deux autres parois opposées (2), auxquelles sont respectivement associées deux nervures verticales (10), la distance mutuelle entre celles-ci est la même dimension modulaire prédéterminée, qui est la distance entre les parois verticales (10,11) au centre de la paroi (1) et dans les coins.

4. Boîtier de raccordement de câbles électriques selon une quelconque des revendications 1 à 3, **caractérisé en ce que** dans la paroi (2) du boîtier, qui est équipée de deux nervures verticales (10), est réalisée une ébauche d'ouverture circulaire (5) entre les nervures verticales (10) et deux ébauches d'ouverture allongées verticalement (6) entre les nervures verticales (10,11) dans la paroi et les coins.

5. Boîtier de raccordement de câbles électriques selon une quelconque des revendications 1 à 4, **caractérisé en ce que** les nervures verticales (11) dans les coins du boîtier sont pourvues d'un orifice de vis (12) qui s'étend à l'intérieur de la nervure, dans sa direction longitudinale, afin de recevoir la vis de fixation du couvercle (4).

6. Boîtier de raccordement de câbles électriques selon une quelconque des revendications 1 à 5, **caractérisé en ce que** il comprend une plaque d'installation (4a), qui peut être placée de manière à être supportée sur les extrémités supérieures des nervures verticales (10,11), et qui agit comme un blindage contre un contact et, si nécessaire, comme une carte de circuit.

7. Boîtier de raccordement de câbles électriques selon une quelconque des revendications 1 à 6, **caractérisé en ce que** dans les coins de la base du boîtier (3) se trouvent des orifices de vis qui s'étendent à l'intérieur des nervures verticales (11) dans les coins du boîtier pour fixer le boîtier à la plaque à partir de l'arrière, eu moyen de vis fixées auxdits orifices de vis à travers la plaque.

8. Boîtier de raccordement de câbles électriques selon une quelconque des revendications 1 à 7, **caractérisé en ce que** il comprend une partie supplémentaire (32) verrouillée aux nervures verticales (10,11) à la hauteur désirée, ladite partie comprenant des pièces de verrouillage métalliques (34) qui peuvent être déplacées afin de venir en prise sur les bords des nervures verticales (10,11).

9. Boîtier de raccordement de câbles électriques selon une quelconque des revendications 1 à 8, **caractérisé en ce que** il comprend au moins quatre, de préférence au moins six dimensions modulaires sur chacune des quatre parois (1,2) du boîtier.
